# EUROPEAN PATENT APPLICATION

(11) **EP 2 702 875 A1**
(43) Date of publication of application: **05.03.2014**
(21) Application number: 12006189.0
(22) Date of filing: 31.08.2012
(51) Int. Cl.: A23G 3/54, A23G 1/54

(54) **Coated comestibles with a chocolate core and processes for their preparation**

(71) Applicant: Südzucker Aktiengesellschaft Mannheim/Ochsenfurt, 68165 Mannheim (DE)
(72) Inventor: Dörr, Tillmann, 67591 Hohen-Sülzen (DE); Haßlinger, Bernd, 67316 Carlsberg (DE)
(74) Representative: Kordel, Mattias

(57) **Abstract**

The present invention relates to improved methods to prepare isomaltulose-containing comestibles with a chocolate core, in particular to prepare coated comestibles with a chocolate core, and to the products obtained thereby.

## Description

### Technical Field

The present invention relates to improved methods to prepare isomaltulose-containing comestibles with a chocolate core, in particular to prepare coated comestibles with a chocolate core, and to the products obtained thereby.

### Background of the Invention

It is well know in the art to provide various comestibles which are embedded in hard or soft coatings. Coatings of such comestibles are frequently used to provide the comestibles with specific functions and properties, such as specifically desired organoleptical characteristics, technological properties and/or a particular optical appearance. It is furthermore well known to apply to sugarless or sugar-containing comestibles sugarless or sugar-containing coatings. As sugarless coatings, coatings made from polyols, such as isomalt, xylitol, sorbitol or maltitol are preferred, while for sugar-containing coatings, sucrose is preferred. In the coating processes of the art, the cores to be coated are provided, the polyol or sugar is added in a liquid medium, applied to the cores and dried. In some cases, after the application of the liquid medium to the cores, powdered dry charges are applied to facilitate a more speedy drying and a different coating characteristic.

WO 92/22217 discloses chewing gums, which comprise isomaltulose. Isomaltulose is akariogen, does not cause gastrointestinal disturbances, has a sweetening power comparable to conventional polyols and is only slowly degraded in the gastrointestinal tract. The document discloses the use of isomaltulose in chewing gum centers as well as in their coatings. Since isomaltulose tends to crystallize out, in particular in form of a monohydrate, isomaltulose coated comestibles tend to show the phenomenon of chipping. Chipping describes the process of a partial destruction or damage of the coating, when exposed to mechanical stress, for instance during packaging or transportation. Furthermore, known isomaltulose coated products which are colored display an uneven and mottled distribution of the food color in the coating.

### Summary of the Invention

The technical problem underlying the present invention is to provide isomaltulose coated comestibles with a chocolate core, which preferably overcome the above-identified technical problems, in particular to provide isomaltulose coated comestibles with a chocolate core, which coatings are more resistant to chipping, that means which show a more elastic behavior of the coating, and therefore have a reduced tendency to be damaged or destroyed when exposed to mechanical stress. Furthermore, it is another object of the present invention to provide coated comestibles with a chocolate core which have a coating that displays a more even and homogenous distribution of food colors contained therein and in particular the brilliance of the food colors is improved.

The present invention solves said problem by the provision of the teaching of the independent claims. In particular, the present invention solves said problems by providing a process for coating chocolate cores comprising the steps of
a) providing at least one chocolate core to be coated,
b) applying to the at least one chocolate core a first liquid medium comprising a whitening agent, so as to obtain at least one layer of a pre-coating,
c) solidifying the at least one layer of the pre-coating, so as to obtain at least one pre-coated chocolate core, and
d) applying to the at least one pre-coated chocolate core a second liquid medium comprising isomaltulose and a binding agent C2 (Coating 2), so as to obtain at least one layer of a second coating,
wherein optionally the steps b) and c) are repeated at least 2 times as to build up more than one layer of the pre-coating.

The present invention overcomes the above-identified technical problems by providing a coating of at least one chocolate core, preferably at least 500 g of chocolate cores, preferably at least 7 kg of chocolate cores, preferably at least 1 t of chocolate cores, preferably 1 to 3 t of chocolate cores, which contains a binding agent in combination with isomaltulose, also termed 6-O-α-D-Glucopyranosyl-fructose, and is commercially available as Palatinose™. In particular, it could surprisingly be shown that the use of at least 3 weight-%, preferably 3 to 4.5 weight-%, preferably 5 to 10 weight-%, of a binding agent (based on the total dry weight of the coating) together with isomaltulose advantageously and unexpectedly improves the chipping behavior of the coatings, i.e. reduces the extent and frequency of the chipping. In particular, it could be shown that under mechanical stress, in particular mechanical pressure and/or shearing force, the coatings of the present invention remain intact or at least considerably less damaged than isomaltulose coated products of which the organoleptical and technological properties are comparable, but which have been prepared with less binding agent, in particular less than 3 weight-%. The use of at least 3% binding agent, in particular gum arabic, in combination with isomaltulose in the coating provides preferably a more elastic coating, avoiding or reducing chipping of the coating. Furthermore, it could be preferably shown that a high amount of binding agent, in particular gum arabic, in the coating combined with isomaltulose leads to a more homogenous distribution of food colors contained in said coating.

### Detailed Description of Certain Embodiments of the Invention

In the context of the present invention, a comestible with a chocolate core is a food, in particular a confectionery product, preferably for human, but also for animal consumption.

In the context of the present invention, a liquid medium is preferably an aqueous coating medium, in particular a solution or suspension of the coating ingredients to be applied to the chocolate cores in water.

In the context of the present invention, the term "whitening agent" is understood as agent for whitening the produced pre-coating. The whitening agent is preferably not completely soluble in the first liquid medium, preferably solely dispersible in the first liquid medium, preferably at least partially. Preferably the whitening agent is insoluble in water. After the solidification of the first liquid medium according to step c) white crystals or white particles of the whitening agent are preferably present in the pre-coating. The whitening agent can be a white pigment, or a white substance being more or less soluble in the first liquid medium.

In a preferred embodiment of the present invention, in the pre-coating, also termed first coating, the amount of the binding agent is higher than in the second coating.

Especially the combination of the whitening agent and isomaltulose applied additionally or alternatively as dry charge to the pre-coated chocolate cores, results in an improved white appearance of the pre-coating. The specific combination of isomaltulose with the whitening agent has an improved covering power. No dark color of the chocolate core is preferably visible through the pre-coating thereby.

Preferably, the at least one layer of the pre-coating improves furthermore the adhesion of the at least one layer of the second coating. By said improvement a more even and regular distribution of the second coating medium can be provided. The presence of the pre-coating on the chocolate cores improves also preferably the stability of the chocolate cores, especially the temperature resistance of the chocolate cores. With this specific pre-coating higher temperature during the application of the second and/or third liquid medium, especially the second liquid medium can be adjusted.

By the application of the pre-coating the brilliance of the food color applied to the chocolate cores in the second and/or third coating is preferably improved.

In a preferred embodiment of the present invention the first liquid medium used in step b) comprises further a binding agent PC (Pre-Coating).

In a preferred embodiment of the present invention the first liquid medium comprises further isomaltulose.

In a preferred embodiment of the present invention the isomaltulose is present in the first liquid medium in an amount from 40 to 98 % by weight, preferably 45 to 75 % by weight, preferably 50 to 65 % by weight (based on the total amount of the first liquid medium).

In a preferred embodiment of the present invention the isomaltulose is present in the first coating in an amount of 70 to 98 % by weight, preferably 75 to 90 % by weight, preferably 78 to 90 % by weight (based on the total dry solids of the first coating).

In a preferred embodiment of the present invention the whitening agent in the first liquid medium is selected from titanium dioxide and starch, preferably starch, preferably rice starch, most preferably raw rice starch.

In a preferred embodiment of the present invention the whitening agent is present in the first liquid medium in an amount of at least 0.1 % by weight, preferably least 5 % by weight, preferably least 9 % by weight (based on the total amount of the first liquid medium).

In a preferred embodiment of the present invention the whitening agent is present in the pre-coating in an amount 0.1 to 30 % by weight, preferably 0.5 to 20 % by weight, preferably 0.8 to 20 % by weight (based on the total dry solids of the pre-coating).

In a preferred embodiment of the present invention the whitening agent is present in the pre-coating in an amount 0.1 to 5 % by weight, preferably 0.5 to 3 % by weight, preferably 1 to 2 % by weight (based on the total dry solids of the pre-coating).

In a preferred embodiment of the present invention the titanium dioxide is present in the pre-coating in an amount 0.1 to 5 % by weight, preferably 0.5 to 3 % by weight, preferably 1 to 2 % by weight (based on the total dry solids of the pre-coating).

In a preferred embodiment of the present invention the whitening agent is present in the pre-coating in an amount of 5 to 30 % by weight, preferably 7 to 20 % by weight, preferably 10 to 20 % by weight (based on the total dry solids of the pre-coating).

In a preferred embodiment of the present invention the starch is present in the pre-coating in an amount of 5 to 30 % by weight, preferably 7 to 20 % by weight, preferably 10 to 20 % by weight (based on the total dry solids of the pre-coating).

In a preferred embodiment of the present invention the starch, preferably the rice starch, has a specific gel point, i. e. a temperature where gelification of the rice starch by heating is induced, of more than 70 °C, in particular of not less than 72 °C. The raw rice starch remains preferably in its raw, unprocessed, i. e. uncooked, stage, during the process of the present invention, even if the temperature of the composition as part of the coating system or of the applied coating rises above the specific gel point of the rice starch.

In a particularly preferred embodiment the raw rice starch used is a raw rice starch of particularly high purity, in particular having a purity of at least 97 % rice starch, preferably at least 98 % rice starch, preferably 99 % rice starch (based on the total dry weight of the raw rice starch).

In a preferred embodiment the raw rice starch is a native rice starch. In a particular variant thereof it is an amylose rice starch, preferably comprising about or at least 20 % amylose, most preferably the product Remy B7 (Beneo, BE).

In a particular embodiment, the raw rice starch has a particle size distribution from 2 to 8 µm.

In a preferred embodiment of the present invention, subsequent to step d) a third liquid medium comprising isomaltulose and a binding agent C3, preferably gum arabic, is applied to the second coating so as to obtain at least one layer of a third coating and wherein in the third coating the amount of the binding agent is higher than in the second coating.

In a preferred embodiment of the present invention the binding agent, preferably the binding agent PC, the binding agent C2 and/or the binding agent C3 (Coating 3), is a water soluble hydrocolloid. The binding agent, preferably the binding agent PC, the binding agent C2 and/or the binding agent C3, is preferably gum arabic, gelatine, gum tragacanth, locust bean gum, guar gum, vegetable gums, alginate, maltodextrines, corn syrup, pectin, cellulose-type materials, carboxymethylcellulose, hydroxymethylcellulose, potato starch, corn starch, starch, modified starch, rice starch, xanthan or mixtures thereof.

In a preferred embodiment of the present invention the amount of a substance which can act both as whitening and binding agent belongs to the amount of the whitening agent.

In a preferred embodiment of the present invention the amount of a substance which can act both as whitening and binding agent should belong to the amount of the binding agent in the pre-coating.

In a preferred embodiment of the present invention, the binding agent C2 used according to the present invention and used for the second coating is the same as the binding agent C3 used for the third coating and the binding agent PC used for the pre-coating. However, it is in another preferred embodiment also foreseen that all three binding agents PC, C2 and C3 are different from each other.

In a preferred embodiment of the present invention the binding agent PC, the binding agent C2 and the binding agent C3 are selected independently from each other and can be identical or different from the other binding agents.

In a preferred embodiment of the present invention starch is used exclusively as whitening agent.

In a preferred embodiment of the present invention different chemical compounds are used for the binding agent and the whitening agent. Especially, if starch, preferably rice starch, is used as whitening agent the binding agent in the first liquid medium is not starch.

In a preferred embodiment of the present invention the amount of the binding agent in the pre-coating is 1 to 20 weight-%, preferably 1 to 10 weight-%, preferably 2 to 8 weight-%, preferably 2 to 6 weight-%, preferably 1 to 4 weight-% (based on the total dry solids of the pre-coating).

In a preferred embodiment of the present invention the amount of the binding agent in the pre-coating is 11 to 20 weight-%, preferably 12 to 18 weight-%, preferably 12 to 16 weight (based on the total dry solids of the pre-coating).

In a preferred embodiment of the present invention the amount of the binding agent in the second coating is 1 to 10 weight-%, preferably 1 to 5 weight-%, preferably 1 to 4 weight-%, preferably 2 to 4 weight-% (based on the total dry solids of the second coating).

In a preferred embodiment of the present invention the amount of the binding agent in the third coating is 11 to 20 weight-% (based on the total dry solids of the third coating).

In a preferred embodiment of the present invention the first liquid medium is produced by dissolving isomaltulose in water, preferably while stirring, preferably at a temperature of 60 to 70 °C, preferably 65 °C. Afterwards, preferably the binding agent, preferably gum arabic, preferably in form of a solution, is added, preferably while stirring.

Subsequently, the whitening agent, preferably the starch, preferably the rice starch, preferably Remy B7, is added to this suspension or solution at a temperature of at least 55 °C, preferably between 55 and 70 °C. Afterwards, the whitening agent is preferably regularly dispersed in the solution or suspension, especially by using a high shear mixer, preferably ultraturrax under the highest speed. Preferably no agglomerates of the whitening agent are present in the obtained dispersion of the whitening agent.

In a preferred embodiment of the present invention isomaltulose and/or the starch, preferably the rice starch, are sieved before being added in form of a powder to the pre-coated and/or coated chocolate cores, especially to avoid agglomerates thereof.

In a preferred embodiment of the present invention the coating takes place in an open pan, preferably at a medium speed, preferably with a dust removal.

In a preferred embodiment of the present invention the open pan is a perforated or a non-perforated pan.

In a preferred embodiment of the present invention the chocolate cores can be present in form of lentils, loops, crispies and/or balls, especially with an even or uneven surface.

In a preferred embodiment of the present invention the first liquid medium is free of food colors.

In a preferred embodiment of the present invention the second and/or third liquid medium comprises at least one food color.

In a preferred embodiment of the present invention a food color may be a food quality dye, i.e. carotene or TiO₂.

Preferred embodiments for a food color to be used according to the present invention are coloring foodstuffs, preferably black carrot, elderberry, aronia, grape, beetroot, paprika, carrot, turmeric root, spinach, stinging nettle or burnt sugar.

In a further preferred embodiment of the present invention, the food color used is a natural color, preferably carmine, annatto, beta-carotene, lutein, riboflavin, curcumin, copper-chlorophyll, chlorophyll, caramel, vegetable carbon or titanium dioxide.

In another preferred embodiment of the present invention, the food color used is a synthetic color, preferably allura red, carmoisine, amaranth, tartrazine, quinoline yellow, patent blue V, brilliant blue or indigo carmine.

In a preferred embodiment of the present invention the first liquid medium is free of food color, while the second liquid medium contains at least one food color.

In a preferred embodiment of the present invention the process further comprises the steps of
c) solidifying the at least one layer of the pre-coating, preferably by evaporating water from the at least one layer of the pre-coating, preferably by drying, and
ii) repeating steps b) and c) to build up more than one layer, for instance 2 to 100, in particular 2 to 70, preferably 10 to 30 layers, of the pre-coating.

In a preferred embodiment of the present invention the process further comprises the steps of
e) solidifying the at least one layer of the second coating, preferably by evaporating water from the at least one layer of the second coating obtained in step d), preferably by drying, and
f) repeating steps d) and e) to build up more than one layer, for instance 2 to 100, preferably 20 to 80, preferably 40 to 80, in particular 50 to 80, in particular 2 to 50, preferably 10 to 40 layers, most preferably 10 to 20 layers of the second coating.

In a preferred embodiment of the present invention the process further comprises the steps of
g) applying to the at least one coated chocolate core a third liquid medium comprising isomaltulose and the binding agent C3, so as to obtain at least one layer of a third coating,
h) solidifying the at least one layer of the third coating, preferably by evaporating water from the at least one layer of the third coating obtained in step g), preferably by drying, and
j) repeating the steps g) and h) to build up more than one layer, for instance 2 to 100, preferably 20 to 80, preferably 40 to 80, preferably 2 to 50, preferably 20 to 40 layers, of the third coating.

In a particularly preferred embodiment of the present invention it is foreseen to provide a process for coating comestibles with a chocolate core, which are particularly resistant to chipping by conducting the above-identified coating and solidification processes in a particularly high number of cycles, that means coating and drying steps, in particular 50 to 200, in particular 100 to 200 cycles. In a particularly preferred embodiment, it is therefore foreseen to repeat steps b) and c) 50 to 200 times. In a furthermore preferred embodiment it is foreseen to repeat steps d) and e) 50 to 200 times. In a furthermore preferred embodiment it is foreseen to repeat steps g) and h) 50 to 200 times. In a furthermore preferred embodiment, it is foreseen in a combined embodiment to repeat steps b) and c) 50 to 200 times and d) and e) 50 to 200 times and steps g) and h) 50 to 200 times. In a furthermore preferred embodiment, it is foreseen in a combined embodiment to repeat steps d) and e) 50 to 200 times and steps g) and h) 50 to 200 times.

The use of a high number of cycles allows short drying times, so as to obtain coated products, which do not show a significant crunch and therefore have a reduced hardness so as to avoid chipping. The residual water content of the coated products in a preferred embodiment is slightly higher than when using fewer cycles for the same quantity of coating material. This particular embodiment has the further advantage of showing a reduced stickiness of the coated products on the inner surface of the coating drum and, furthermore, the coated products show a more homogenous distribution of the coating ingredients and smooth surface of its coating and additionally an improved processability for further steps, such as a film-coating application step.

In a preferred embodiment of the present invention after the application of the first liquid medium in step b) a sweetening agent, preferably isomaltulose, and/or starch, preferably rice starch, in powdered form is applied to the pre-coated chocolate cores.

In a preferred embodiment of the present invention isomaltulose in powdered form is applied to the at least one layer of the pre-coating according to step b). By said preferred application of powdered isomaltulose the solidification according to step c) of the at least one layer of the pre-coating is preferably obtained.

In a preferred embodiment of the present invention, during or after step b) powdered isomaltulose is applied in a dusting step over the at least one layer of the pre-coating.

In a preferred embodiment of the present invention during or after step d) powdered isomaltulose is applied in a dusting step over the at least one layer of the second coating.

In a preferred embodiment of the present invention during or after step g) powdered isomaltulose is applied in a dusting step over the at least one layer of the third coating.

In a preferred embodiment of the present invention, the drying is done by subjecting the coated product to air, in particular an air current, preferably a constant air current, having a temperature of 5°C to 24°C, preferably 10°C to 22°C, in particular 15°C to 19°C.

In a preferred embodiment of the present invention the drying air has a relative humidity of 5 to 60 %, preferably 5 to 40 %, most preferably 5 to 20 %.

In a preferred embodiment of the present invention, during the entire process an air current is applied to the chocolate cores, so as to dry the chocolate cores constantly.

Due to the constant drying the coatings are solidified, preferably dried, very quickly.

In a preferred embodiment of the present invention, during the entire production of the at least one layer of pre-coating, preferably during all preformed steps b) and c), the at least one chocolate core is constantly dried, preferably with an air current.

In context with the invention "constantly drying" means that the chocolate cores are dried permanently. In a preferred embodiment the drying takes place with an air current, preferably with an air current having a constant velocity. In another preferred embodiment the air current has a non-constant, preferably changing velocity.

In a preferred embodiment of the present invention, during the entire production of the at least one layer of second coating, preferably during all preformed steps d) and e), the at least one chocolate core is constantly dried, preferably with an air current.

In a preferred embodiment of the present invention, during the entire production of the at least one layer of third coating, preferably during all preformed steps g) and h), the at least one chocolate core is constantly dried, preferably with an air current.

In a preferred embodiment of the present invention the air current is interrupted, preferably after each cycle of steps b) and c), preferably after the last layer of the pre-coating is solidified in step c) and before the second liquid medium is applied in step d) for the first time.

In a preferred embodiment of the present invention the air current is interrupted after each cycle of steps d) and e), preferably after the last layer of the second coating is solidified in step e) and before the second liquid medium is applied in step g) for the first time.

In a preferred embodiment of the present invention the air current is interrupted after each cycle of steps g) and h).

In a preferred embodiment of the present invention the air current is interrupted after each cycle of steps b) and c), after each cycle of steps d) and e), and after each cycle of steps g) and h).

In a preferred embodiment of the present invention the air current is interrupted after the last layer of the pre-coating is solidified in step c) and before the second liquid medium is applied in step d) for the first time and after the last layer of the second coating is solidified in step e) and before the second liquid medium is applied in step g) for the first time.

In a preferred embodiment of the present invention the air current flows over a period of time which corresponds to at least 80 %, preferably at least 90 %, preferably at least 95 %, preferably at least 96 %, preferably at least 97 %, preferably at least 98 %, preferably at least 99 %, preferably 100 % of the time of the entire coating process.

In a preferred embodiment of the present invention the at least one chocolate core is dried, preferably with an air current, for at least 80 %, preferably at least 90 %, preferably at least 95 %, preferably at least 96 %, preferably at least 97 %, preferably at least 98 %, preferably at least 99 %, preferably 100 % of the time of the entire coating process.

In a preferred embodiment of the present method, the drying is done by adding part of the coating ingredients in dry and powdered form to the coated products during or after step b) for the first coating and/or, for the second coating during or after step d) and/or, for the third coating during or after step g).

Preferably, the solid content of the first and optionally second and third liquid medium is from 30 to 90%, preferably 50 to 75% (weight-% based on total weight of liquid medium).

In a preferred embodiment, the first and optionally second and third liquid medium has a temperature from 50 to 85°C, preferably 60°C to 70°C.

In a preferred embodiment of the present method, during application of the first and/or second and/or third liquid medium the coated products are subjected to a distribution step, wherein the coated products are agitated to allow a homogenous distribution of the coating medium on the chocolate core.

In a preferred embodiment of the present method, during application of the first and/or second and/or third liquid medium the coated products are subjected to no distribution step, wherein the coated products are agitated to allow a homogenous distribution of the coating medium on the chocolate core.

In a preferred embodiment of the present method all coating ingredients are applied in form of the first and optionally the second and third liquid medium, in particular as a coating suspension or a coating solution.

In a preferred embodiment of the present method, a part of the coating ingredients is applied in form of a liquid coating medium and a further part is applied in dry and powdered form.

In a preferred embodiment of the present method, all or part of the isomaltulose of the coating is added in dry and powdered form.

In a preferred embodiment of the present method, at least a part of the binding agent is added in dry and powdered form.

In a preferred embodiment of the present invention the application time of the first liquid medium in step b) is at most one minute, preferably at most 30 seconds, preferably at most 10 seconds.

In a preferred embodiment of the present invention the amount of the first liquid medium applied in step b) is 20 to 100 g, preferably 40 to 100 g for a batch size of 7 kg of chocolate cores.

In a preferred embodiment said application in step b) is performed by spraying the first liquid medium under high pressure, preferably with a nozzle onto the at least one comestible with a chocolate core. Preferably, the spraying pressure is from 10 to 100 bars, preferably 20 to 80 bars, preferably 25 to 55 bars, preferably 30 to 40 bars.

In a preferred embodiment of the present invention the pressure with which the first liquid medium is sprayed onto the chocolate cores in step b) is not constant, preferably is continuously increased or continuously decreased, preferably is continuously increased at the beginning and after reaching a maximum continuously decreased.

In a preferred embodiment of the present invention the pressure with which the first liquid medium is sprayed onto the chocolate cores in step b) is constant. In a preferred embodiment of the invention the pre-coating is produced by spraying the first liquid medium under high pressure onto the at least one chocolate core and during the entire production of the pre-coating the at least one chocolate core is constantly dried, preferably with an air current.

In a preferred embodiment of the invention the second coating is produced by spraying the second liquid medium under high pressure onto at least one chocolate core and during the entire production of the second coating the at least one chocolate core is constantly dried, preferably with an air current.

In a preferred embodiment of the invention the third coating is produced by spraying the third liquid medium under high pressure onto at least one chocolate core and during the entire production of the third coating the at least one chocolate core is constantly dried, preferably with an air current.

In a preferred embodiment of the invention the pre-coating is produced by spraying the first liquid medium under high pressure onto the at least one chocolate core and/or during the entire production of the pre-coating the at least one chocolate core is constantly dried, preferably with an air current, whereas the other coatings, preferably the second and/or third coating are produced without spraying the second and/or third liquid medium under high pressure onto the chocolate cores and drying the at least one chocolate core constantly.

In a preferred embodiment of the invention the second coating is produced by spraying the second liquid medium under high pressure onto at least one chocolate core and/or during the entire production of the second coating the at least one chocolate core is constantly dried, preferably with an air current, whereas the other coatings, preferably the pre- and/or third coating are produced without spraying the first and/or third liquid medium under high pressure onto the chocolate cores and drying the at least one chocolate core constantly.

In a preferred embodiment of the invention the third coating is produced by spraying the third liquid medium under high pressure onto the at least one chocolate core and/or during the entire production of the third coating the at least one chocolate core is constantly dried, preferably with an air current, whereas the other coatings, preferably the pre- and/or second coating are produced without spraying the first and/or second liquid medium under high pressure onto the at least one chocolate core and drying the at least one chocolate core constantly.

In a preferred embodiment of the invention the pre- and/or second and/or third coating are produced by spraying the first and/or second and/or third liquid medium under high pressure onto the at least one chocolate core and during the entire production of the pre- and/or second and/or third coating the at least one chocolate core is constantly dried, preferably with an air current, whereas the other coatings, preferably the pre- and/or second and/or third coating are produced without spraying the first and/or second and/or third liquid medium under high pressure onto the at least one chocolate core and drying the at least one chocolate core constantly.

By spraying the liquid media, that is the first, second and/or third liquid medium, with a high pressure onto the at least one chocolate core, the liquid media are distributed extremely finely and extremely regularly on the surface of the at least on chocolate core. This results preferably in a very smooth surface of the coated chocolate core. Furthermore, by said high pressure the liquid media is present in form of very small liquid droplets, resulting in a large surface. Due to said large surface the at least one layer of the coatings is solidified, preferably dried, very quickly.

In a preferred embodiment of the present invention the application time of the second liquid medium in step d) is at most one minute, preferably at most 30 seconds, preferably at most 10 seconds.

In a preferred embodiment of the present invention the amount of the second liquid medium applied in step d) is 20 to 100 g, preferably 40 to 100 g for a batch size of 7 kg of chocolate cores.

In a preferred embodiment said application in step d) is performed by spraying the second liquid medium under high pressure, preferably with a nozzle onto the at least one comestible with a chocolate core. Preferably, the spraying pressure is from 10 to 100 bars, preferably 20 to 80 bars, preferably 25 to 55 bars, preferably 30 to 40 bars.

In a preferred embodiment of the present invention the pressure with which the second liquid medium is sprayed onto the chocolate cores in step d) is not constant, preferably is continuously increased or continuously decreased, preferably is continuously increased at the beginning and after reaching a maximum continuously decreased.

In a preferred embodiment of the present invention the pressure with which the second liquid medium is sprayed onto the chocolate cores in step d) is constant.

In a preferred embodiment of the present invention the application time of the third liquid medium in step g) is at most one minute, preferably at most 30 seconds, preferably at most 10 seconds.

In a preferred embodiment of the present invention the amount of the third liquid medium applied in step g) is 20 to 100 g, preferably 40 to 100 g for a batch size of 7 kg of chocolate cores.

In a preferred embodiment said application in step g) is performed by spraying the third liquid medium under high pressure, especially with a nozzle onto the at least one comestible with a chocolate core. Especially, the spraying pressure is from 10 to 100 bars, preferably 20 to 80 bars, preferably 25 to 55 bars, preferably 30 to 40 bars.

In a preferred embodiment of the present invention the pressure with which the third liquid medium is sprayed onto the chocolate cores in step g) is not constant, preferably is continuously increased or continuously decreased, preferably is continuously increased at the beginning and after reaching a maximum continuously decreased.

In a preferred embodiment of the present invention the pressure with which the third liquid medium is sprayed onto the at least one chocolate core in step g) is constant. Especially the combination of spraying with high pressure and drying constantly results in a very time-and cost-efficient process producing chocolate cores with a very smooth surface, since the liquid media being extremely finely and regularly distributed on the cores are dried very quickly.

In a preferred embodiment of the present invention the process comprises adding powdered isomaltulose to the at least one layer of the first, or of the second or of the third coating or, of the first, second and third coating and repeating steps b), or d) or g) or b), d) and g) and the subsequent dusting step, i.e. the addition of the powdered isomaltulose, so as to build up more than one layer of the first, second and/or third coating.

Thus, the present invention foresees in a preferred embodiment at least one dusting step, according to which after step b), that means after applying a first liquid medium to the chocolate core, powdered isomaltulose is added as a dry charge and the steps of applying a first liquid medium and the powdered isomaltulose is repeated several times, so as to build up more than one layer of the first coating. In a furthermore preferred embodiment of the present invention, it is foreseen that subsequent to step d) that means after applying the second liquid medium to the chocolate core, powdered isomaltulose is added as a dry charge and the steps of applying a second liquid medium and the powdered isomaltulose is repeated several times so as to build up more than one layer of the second coating. In a preferred embodiment of the present invention, dry charges are added both after step b) and after step d), preferably repeatedly. In a further preferred embodiment of the present invention, it is foreseen that subsequent to step g), that means after applying the third liquid medium to the chocolate core, isomaltulose is added as a dry charge and the steps of applying a third liquid medium and the powdered isomaltulose is repeated several times so build up more than one layer of the third coating. In a preferred embodiment of the present invention, dry charges are added after each steps b), d) and g), preferably repeatedly.

In a preferred embodiment of the present invention the process comprises as final coating step a step, wherein a finishing agent, preferably wax, is applied to the coated chocolate cores, preferably to polish and/or gloss the coating.

The present invention also relates to coated comestibles comprising a chocolate core and a first coating, wherein the pre-coating comprises at least 1 weight-%, 1 to 20 weight-%, preferably 1 to 10 weight-%, preferably 2 to 8 weight-%, preferably 2 to 6 weight-%, preferably 1 to 4 weight-% (based on total dry weight of the pre-coating) of a binding agent PC.

In a preferred embodiment of the present invention the coated comestible comprises a second coating comprising isomaltulose and at least 1 weight-% of a binding agent C2, preferably 1 to 10 weight-%, preferably 1 to 5 weight-%, preferably 1 to 4 weight-%, preferably 2 to 4 weight-% (based on total dry weight of the first coating) of the binding agent C2, and a third coating comprising isomaltulose and a binding agent C3, preferably 11 to 20 weight-% (based on total dry weight of the third coating) of the binding agent C3, wherein the amount of the binding agent in the third coating is higher than in the second coating.

In a preferred embodiment of the present invention the first coating is free of food colors, while the second and/or third coating comprises at least one food color.

In a preferred embodiment of the present invention, the first coating comprises 10 to 98, preferably 30 to 98, most preferably 40, 50, 60, 70, 80 or 85 to 98% isomaltulose (based on total dry weight of the first coating).

In a furthermore preferred embodiment of the present invention, the second coating of the present invention comprises 10 to 98, preferably 30 to 89, most preferably 40, 50, 60, 70, 80 or 85 to 89% isomaltulose (based on total dry weight of the second coating).

In a further preferred embodiment of the present invention, the third coating of the present invention comprises 10 to 98 %, preferably 30 to 89 %, most preferably 40 %, 50 %, 60 %, 70 %, 80 % or 55 to 98 % isomaltulose (based on the total dry weight of the third coating).

In the context of the present invention the combination of weight-percentage values for at least two coating ingredients contained together in a first or second or third coating add up to 100 weight-% (based on total dry weight of coating).

In a particularly preferred embodiment of the present invention, the coated comestible comprises a chocolate core and solely a first coating. In a furthermore, even more preferred embodiment, the coated comestibles of the present invention comprise a chocolate core, a first coating and a second coating. In a particularly preferred embodiment of the present invention the coated comestible comprises a chocolate core, a first coating, a second coating and a third coating.

In a preferred embodiment, it is foreseen that the total coating comprising the first and the second coating comprises 40 to 90, preferably 50 to 90, most preferably 60 to 90 weight-% second coating and 10 to 60, preferably 10 to 50 and most preferably 10 to 40 weight-% of the first coating (each based on dry weight of total coating).

In a preferred embodiment of the present invention the pre-coating is TiO₂-free. In a preferred embodiment of the present invention the TiO₂ is solely present in the pre-coating, preferably as whitening agent.

In a preferred embodiment of the present invention the comestible with a chocolate core produced according to the present invention is free of sucrose, fructose and/or glucose.

In a preferred embodiment of the present invention the isomaltulose is the sole sweetening agent present in the produced comestible with the chocolate core.

In a preferred embodiment of the present invention isomaltulose is the sole bulking agent present in the produced comestible with the chocolate core according to the present invention.

In a further preferred embodiment of the present invention, the coating, in particular the second coating, the third coating or the second and third coating comprises in addition to isomaltulose and the binding agent at least one further panning additive.

In the context of the present invention, a panning additive is any substance which may be added into the coating process to either influence the coating or panning process itself and/or influence product characteristics, which may either be relevant for the process or for the finally obtained product, for instance its organoleptic, sensoric, physiological, storage or optical behavior.

In a preferred embodiment of the present invention, the second or the third, or the second and third coating each comprises 1 to 60 weight-%, preferably 1 to 45 weight-% (based on total dry weight of the second or third coating) of the at least one panning additive.

In a preferred embodiment of the present invention, the second, the third or the second and third coating each comprises 1 to 30 weight-%, preferably 1 to 20 weight-% of the at least one panning additive (based on total dry weight of the second or third coating).

In a preferred embodiment of the present invention, the third coating comprises 30 to 90 weight-% isomaltulose (based on total dry weight of the third coating).

In a preferred embodiment of the present invention, the comestible comprises a chocolate core and a second coating, wherein the second coating comprises 5 to 10 weight-% binding agent, 25 to 98 weight-% isomaltulose and 0 to 70 weight-%, preferably 1 to 70 weight-% (each based on dry weight of the second coating and all constituents adding up to 100% total weight of first coating) of at least one panning additive.

In a preferred embodiment of the present invention, the comestible comprises a chocolate core, a second coating and a third coating, wherein the second coating comprises 5 to 10 weight-% binding agent, 25 to 98 weight-% isomaltulose and 0 to 70 weight-% (each based on dry weight of the second coating and all constituents adding up to 100% total weight of second coating) of at least one panning additive and the third coating comprises 11 to 20 weight-% binding agent, 25 to 89 weight-% of isomaltulose and 0 to 70 weight-%, preferably 1 to 70 weight-% (each based on total dry weight of third coating and all constituents adding up to 100% total weight of second coating) of at least one panning additive.

In a preferred embodiment of the present invention, the third coating comprises 13 to 17 weight-% binding agent (based on total dry weight of the third product coating).

In a preferred embodiment of the present invention, the at least one panning additive is selected from groups consisting of calcium carbonate, polyol, leucrose, sugar alcohol, rice starch, SiO₂, magnesium carbonate, high intensity sweetener, flavoring, aroma, colorant, preserving agent, mineral salt, emulsifier, vitamin, active pharmaceutical ingredients and talc.

It is also possible according to the present invention in one embodiment that the panning additive is a conventional sugar, such as sucrose, fructose or glucose.

Most preferably, however, the present invention relates to a comestible or a coating thereof which is free of sucrose or free of fructose or free of glucose or free of both or all of them.

It is preferred according to the present invention, that the pre-coating, the second coating and third coating, preferably all three coatings comprise isomaltulose as the only sugar.

It is furthermore preferred according to the present invention, that the first coating, the second coating, the third coating or the first, second and third coating comprise isomaltulose as the only sweetening agent providing a sweetening power and body to the coating. Thus, in a preferred embodiment of this embodiment of the present invention, the first coating, the second coating, the third coating or the first, second and third coating comprise isomaltulose and at least one intensive sweetener as the only sweetening agents.

It is also preferred according to the present invention that the isomaltulose contained in the first coating, in the second coating, the third coating or in the first, second and third coating is the only sweetening agent present at all in the first coating, the second coating, the third coating or the first, second and third coating.

In another preferred embodiment of the present invention, the first coating, the second coating, the third coating or the first, second and third coating comprise isomaltulose and a non-sugar further sweetening agent, such as a sugar-alcohol and/or a high intensity sweetener as the only sweetening agents contained in the coating.

In a preferred embodiment of the present invention, the first, second, third or first, second and third coating comprises at least one high intensity sweetener as a panning additive.

In a preferred embodiment of the present invention, the first or second or third or all three coatings comprise a high intensity sweetener selected from the group consisting of thaumatin, stevioside, rebaudioside A, neohesperidin dihydrochalcone, acesulfam K, aspartame, cyclamate, saccharin, glycyrrhicine, alitame, monellin and sucralose.

In a preferred embodiment of the present invention, the at least one sugar alcohol is a mono- or disaccharide alcohol.

In a preferred embodiment of the present invention, the at least one sugar alcohol is selected from the group consisting of maltitol, xylitol, isomalt, which is a mixture of 1,6-GPS and 1,1-GPM of 43 to 57% 1,6-GPS and 57 to 43% 1,1-GPM, preferably a 1:1 mixture, sorbitol, erythritol, mannitol, lactitol, 1-O-α-D-Glucopyranosyl-D-sorbitol (1,1-GPS), 1-O-α-D-Glucopyranosyl-D-mannitol (1,1-GPM), 6-O-α-D-Glucopyranosyl-D-sorbitol (1,6-GPS), isomalt GS, which is a mixture of 72 to 78%, preferably 75%, 1,6-GPS and 22 to 28%, preferably 25% (all % given in weight of dry matter), 1,1-GPM, and a mixture of 1,1-GPM, 1,1-GPS and 1,6-GPS.

In a particularly preferred embodiment the sugar-alcohol is isomalt. In a further particularly preferred embodiment, the sugar-alcohol is isomalt GS.

In a preferred embodiment of the present invention, the first, the second, the third or the first, second and third coating comprises 50 to 80 weight-% of the at least one sugar alcohol (based on dry weight of the product coating).

In preferred embodiments, chocolate cores can be subjected according to the present invention to a soft dragee coating or a hard dragee coating. A "soft dragee coating" means the application of the coating ingredients, in particular the binding agent and the isomaltulose, optionally also the panning additive, dissolved or suspended in water to moving chocolate cores with, after each application, a powder of all or one of the coating ingredients being dispersed on to dry the coating layer, i.e. to bind the moisture, which regularly leads to a residual water content of 7 to 10% (without consideration of crystal water content) and a soft coating. This type of dragee coating produces a soft dragee coating. A "hard dragee coating" means, as in the soft dragee coating, the application of the coating ingredients dissolved or suspended in water onto moving chocolate cores, optionally with coating ingredients powder being applied, but rather the non-aqueous constituents being dried on using hot, warm or cold air, which leads to a residual water content of 1-5% (without consideration of crystal water content) and a hard coating. As in the soft dragee coating, preferably a multiplicity of different individual applications, called repetitions or cycles, are carried out, between which drying is performed with warm air or cold air, so that dragee coatings of different thicknesses can be produced. The hard dragee coating method can also be carried out using two or more different coating solutions which are applied successively.

In a preferred embodiment of the inventive method, the chocolate core is coated with the first and/or second coating by means of at least one hard-dragee-coating step, with the layer comprising the isomaltulose and the binding agent. The hard-dragee coating step comprises applying a solution or suspension which comprises at least one binding agent, isomaltulose and optionally at least one panning additive, and subsequently drying the applied solution or suspension with an air current.

In a further preferred embodiment of the inventive method the chocolate core, is coated with the first and/or second coating by means of at least one soft dragee-coating step, with the layer comprising the isomaltulose and the binding agent. The soft-dragee coating step comprises applying a solution or suspension which comprises at least one binding agent and the isomaltulose, optionally also at least one panning additive, and dusting the applied solution or suspension with a powder of isomaltulose and/or the binding agent. In a preferred embodiment, the applied solution or suspension comprises the total amount of the binding agent or a part thereof. In a preferred embodiment the binding agent is completely or partially introduced into the solution or suspension and is applied to the chocolate cores to be dragee-coated. In a further preferred embodiment, the powder comprises the total amount of the binding agent or a part thereof. In a preferred embodiment, the binding agent is completely or partially used as powder for dusting the solution or suspension applied to the chocolate core.

The present invention also relates to a method for the preparation of a comestible with a first, preferably also with a second coating, preferably of a coated product according to the above, wherein the comestible comprises a chocolate core and a first coating and the first coating comprises at least the coating ingredients at least one binding agent, isomaltulose and optionally at least one panning additive, which process comprises applying a coating medium comprising at least partially the coating ingredients to said chocolate core, and drying the coated product, so as to obtain a first coating, which comprises 5 to 10 weight-% binding agent, 25 to 98 weight-% of isomaltulose and 0 to 70 weight-% (each based on total dry weight of first coating) of at least one panning additive. Preferably, the method also comprises the application of a second liquid medium comprising at least partially the coating ingredients to said chocolate core which comprises the first coating and drying the coated products so as to obtain a second coating, which comprises 11 to 20 weight-% binding agent, 25 to 89 weight-% of isomaltulose and 0 to 70 weight-% (each based on total dry weight of first coating) of at least one panning additive.

In a furthermore preferred embodiment, in which a particularly high number of cycles is conducted, namely 100 to 200 cycles, the residual water content of the coating in a hard coating method of the present invention is a water content of 1.5 to 5.5%, preferably 3 to 7% (each by weight, without consideration of crystal water content). In a furthermore preferred embodiment of the present invention, in which a particularly high number of cycles, namely 100 to 200 cycles, is conducted, a soft coating method of the present invention provides a soft coating with a residual water content from 7.5 to 10.5%, preferably 9 to 12% (each by weight, without consideration of crystal water content).

In a preferred embodiment of the present method, the coating ingredients applied in dry and powder form represent 30 to 75% by weight, preferably 40 to 75% by weight of the overall amount of the coating ingredients of the first, and optionally of the second, coating (each separately based on total dry weight of the first and, if present, of the second coating).

In a preferred embodiment of the present method comprising at least one repetition of the coating and drying steps, i.e. two cycles, either in preparing the first or the second or both coatings, it is foreseen that in a first phase of the method, the coating medium is applied and the drying is done, the latter by adding part of the coating ingredients in dry and powdered form to the coated products one or more repeated times and wherein in a second phase of the method the first, and optionally the second liquid coating medium is applied to the coated products and dried by subjecting the coated products to drying air one or more repeated times without the addition of dry and powdered coating ingredients. It is also possible to reverse the order of the first and second phase or to alternate the cycles.

The present invention also relates to coated comestibles prepared according to any one of the above-identified processes.

In a second aspect of the present invention a process for coating comestibles, especially comestible cores, is provided comprising the steps of:
aa) providing at least one comestible core to be coated, preferably at least 500 g of comestible cores, preferably at least 7 kg of comestible cores, preferably at least 1 t of comestible cores, preferably 1 to 3 t of comestible cores,
bb) applying to the at least one comestible core a first liquid medium, and
cc) solidifying the at least one layer of the first coating by drying with a constant air current, preferably in a current flow.

In a preferred embodiment according to the second aspect in step bb) the application time of the first liquid medium to the at least one comestible core, also termed core, is at most one minute, preferably at most 30 seconds, preferably at most 10 seconds.

In a preferred embodiment according to the second aspect said application in step bb) is performed by spraying the first liquid medium under high pressure, especially with a nozzle onto the at least one comestible core. Especially, the spraying pressure is from 10 to 100 bars, preferably 20 to 80 bars, preferably 25 to 55 bars, preferably 30 to 40 bars.

In a preferred embodiment according to the second aspect all embodiments, especially the preferred embodiments listed in the context of the comestibles with a coated chocolate core applies mutatis mutandis to the embodiments of the second aspect, especially to the process for coating comestibles. In a preferred embodiment of the second aspect the process further comprises the steps of
cc) solidifying the at least one layer of the pre-coating, preferably by evaporating water from the at least one layer of the pre-coating in step cc), preferably by drying, and
ii) repeating steps bb) and cc) to build up more than one layer, for instance 2 to 100, in particular 2 to 70, preferably 10 to 30 layers, of the first coating.

In a preferred embodiment of the second aspect the process further comprises the steps of
dd) applying to the at least one coated core a second liquid medium comprising isomaltulose and a binding agent C2 (Coating 2), so as to obtain at least one layer of a second coating.
ee) solidifying the at least one layer of the second coating, preferably by evaporating water from the at least one layer of the second coating obtained in step dd), preferably by drying, and
ff) repeating steps dd) and ee) to build up more than one layer, for instance 2 to 100, preferably 20 to 80, preferably 40 to 80, in particular 50 to 80, in particular 2 to 50, preferably 10 to 40 layers, most preferably 10 to 20 layers of the second coating.

In a preferred embodiment of the second aspect the process further comprises the steps of
gg) applying to the at least one coated core a third liquid medium comprising isomaltulose and the binding agent C3, so as to obtain at least one layer of a third coating,
hh) solidifying the at least one layer of the third coating, preferably by evaporating water from the at least one layer of the third coating obtained in step gg), preferably by drying, and
jj) repeating the steps gg) and hh) to build up more than one layer, for instance 2 to 100, preferably 20 to 80, preferably 40 to 80, preferably 2 to 50, preferably 20 to 40 layers, of the third coating.

In a preferred embodiment of the second aspect the cores of the comestibles are filled chewing gum centers, non-filled chewing gum centers, tablets, soft caramels, hard caramels, chewing candies, boiled candies, chocolate, jelly gums, nuts or marshmallows.

According to the second aspect, it is provided that the core, in particular the chewing gum core, can be produced by customary methods. After producing the product cores, in particular the chewing gum cores, the finished cores are, for the preparation of the first and/or second coating, preferably dragee-coated, with dragee-coating methods which are customarily used.

In a preferred embodiment of the second aspect, the drying is done by subjecting the coated product to air, in particular an air current, preferably a constant air current, having a temperature of 5 °C to 80°C, preferably 30°C to 80°C, in particular 25°C to 45°C.

In a preferred embodiment of the second aspect, the drying is done by adding part of the coating ingredients in dry and powdered form to the coated products during or after step bb) for the first coating.

Preferably, the solid content of the first and optionally second liquid medium is from 30 to 90%, preferably 50 to 75% (weight-% based on total weight of liquid medium).

In a preferred embodiment of the second aspect, the first and optionally second liquid medium has a temperature from 50 to 85°C, preferably 60°C to 70°C.

In a preferred embodiment of the second aspect, during application of the first and/or second liquid medium the coated products are subjected to no distribution step, wherein the coated products are agitated to allow a homogenous distribution of the coating medium on the product core.

In a preferred embodiment of the second aspect all coating ingredients are applied in form of the first and optionally the second liquid medium, in particular as a coating suspension or a coating solution.

In a preferred embodiment of the second aspect, a part of the coating ingredients is applied in form of a liquid coating medium and a further part is applied in dry and powdered form.

In a preferred embodiment of the second aspect, all or part of the isomaltulose of the coating is added in dry and powdered form.

In a preferred embodiment of the second aspect, at least a part of the binding agent is added in dry and powdered form.

In a preferred embodiment of the second aspect, preferably in a hard coating method, the application of the first, and optionally of the second, liquid medium and the subsequent drying are repeated one or more times (each time also being called a cycle), preferably 80 to 120 times. A preferred hard coating method of the present invention results in a residual water content of the coating from preferably 1 to 5% (by weight, without consideration of crystal water content) In a preferred embodiment of the present invention, preferably in a soft coating method, the application of the first, and optionally of the second, liquid medium and the subsequent drying are repeated 3 to 10 times. A preferred soft coating method of the present invention results in a residual water content of the coating from preferably 7 to 10% (by weight, without consideration of crystal water content).

In a furthermore preferred embodiment of the second aspect, the application of the first liquid medium and the subsequent drying are repeated 100 to 200 times, i.e. in 100 to 200 cycles. In a further preferred embodiment wherein a second coating is applied, the application of the second liquid medium and the subsequent drying is repeated 80 to 120 times, i.e. 80 to 120 cycles. However, it is also preferred to repeat the application of the second liquid medium and the subsequent drying 100 to 200 times, that means to carry out 100 to 200 cycles.

In a preferred embodiment of the second aspect, the drying is done both by subjecting the coated product to air, preferably an air current, having a temperature of 5 to 80°C and by adding part of the coating ingredients in dry and powdered form to the coated products.

In a preferred embodiment of the second aspect the drying air has a relative humidity of 5 to 60 %, preferably 5 to 40 %, most preferably 5 to 20 %.

In a preferred embodiment of the second aspect the open pan is a perforated or a non-perforated pan.

In a preferred embodiment of the second aspect, during the entire production of the at least one layer of first coating, preferably during all preformed steps bb) and cc), the at least one core is constantly dried, preferably with an air current.

In context with the second aspect "constantly drying" means that the cores are dried permanently. In a preferred embodiment of the second aspect the drying takes place with an air current, preferably with an air current having a constant velocity. In another preferred embodiment of the second aspect the air current has a non-constant, preferably changing velocity.

In a preferred embodiment of the second aspect, during the entire production of the at least one layer of second coating, preferably during all preformed steps dd) and ee), the at least one core is constantly dried, preferably with an air current.

In a preferred embodiment of the second aspect, during the entire production of the at least one layer of third coating, preferably during all preformed steps gg) and hh), the at least one core is constantly dried, preferably with an air current.

In a preferred embodiment of the second aspect the air current is interrupted, preferably after each cycle of steps bb) and cc), preferably after the last layer of the first coating is solidified in step cc) and before the second liquid medium is applied in step dd) for the first time.

In a preferred embodiment of the second aspect the air current is interrupted after each cycle of steps dd) and ee), preferably after the last layer of the second coating is solidified in step ee) and before the second liquid medium is applied in step gg) for the first time.

In a preferred embodiment of the second aspect the air current is interrupted after each cycle of steps gg) and hh).

In a preferred embodiment of the second aspect the air current is interrupted after each cycle of steps bb) and cc), after each cycle of steps dd) and ee), and after each cycle of steps gg) and hh).

In a preferred embodiment of the second aspect the air current is interrupted after the last layer of the first coating is solidified in step cc) and before the second liquid medium is applied in step dd) for the first time and after the last layer of the second coating is solidified in step ee) and before the second liquid medium is applied in step gg) for the first time.

In a preferred embodiment of the second aspect, during the entire process an air current is applied to the cores, so as to dry the cores constantly.

In a preferred embodiment of the second aspect the air current flows over a period of time which corresponds to at least 80 %, preferably at least 90 %, preferably at least 95 %, preferably at least 96 %, preferably at least 97 %, preferably at least 98 %, preferably at least 99 %, preferably 100 % of the time of the entire coating process.

In a preferred embodiment of the second aspect the at least one core is dried, preferably with an air current, for at least 80 %, preferably at least 90 %, preferably at least 95 %, preferably at least 96 %, preferably at least 97 %, preferably at least 98 %, preferably at least 99 %, preferably 100 % of the time of the entire coating process.

Due to the constant drying the coatings are solidified, preferably dried, very quickly.

In a preferred embodiment of the second aspect the amount of the first liquid medium applied in step bb) is 20 to 100 g, preferably 40 to 100 g for a batch size of 7 kg of cores.

In a preferred embodiment of the second aspect the amount of the second liquid medium applied in step dd) is 20 to 100 g, preferably 40 to 100 g for a batch size of 7 kg of cores.

In a preferred embodiment of the second aspect the amount of the third liquid medium applied in step gg) is 20 to 100 g, preferably 40 to 100 g for a batch size of 7 kg of cores.

In a preferred embodiment of the second aspect the pressure with which the first liquid medium is sprayed onto the cores in step bb) is not constant, preferably is continuously increased or continuously decreased, preferably is continuously increased at the beginning and after reaching a maximum continuously decreased.

In a preferred embodiment of the second aspect the pressure with which the first liquid medium is sprayed onto the at least one core in step b) is constant.

In a preferred embodiment of the invention the first coating is produced by spraying the first liquid medium under high pressure onto the at least one core and during the entire production of the first coating the at least one core is constantly dried, preferably with an air current.

In a preferred embodiment of the second aspect the second coating is produced by spraying the second liquid medium under high pressure onto at least one core and during the entire production of the second coating the at least one core is constantly dried, preferably with an air current.

In a preferred embodiment of the second aspect the third coating is produced by spraying the third liquid medium under high pressure onto at least one core and during the entire production of the third coating the at least one core is constantly dried, preferably with an air current.

In a preferred embodiment of the second aspect the pre-coating is produced by spraying the first liquid medium under high pressure onto the at least one core and/or during the entire production of the first coating the at least one core is constantly dried, preferably with an air current, whereas the other coatings, preferably the second and/or third coating are produced without spraying the second and/or third liquid medium under high pressure onto the at least one core and drying the at least one core constantly.

In a preferred embodiment of the second aspect the second coating is produced by spraying the second liquid medium under high pressure onto at least one core and/or during the entire production of the second coating the at least one core is constantly dried, preferably with an air current, whereas the other coatings, preferably the first and/or third coating are produced without spraying the first and/or third liquid medium under high pressure onto the cores and drying the at least one core constantly.

In a preferred embodiment of the second aspect the third coating is produced by spraying the third liquid medium under high pressure onto the at least one core and/or during the entire production of the third coating the at least one core is constantly dried, preferably with an air current, whereas the other coatings, preferably the first and/or second coating are produced without spraying the first and/or second liquid medium under high pressure onto the at least one core and drying the at least one core constantly.

In a preferred embodiment of the second aspect the pre- and/or second and/or third coating are produced by spraying the first and/or second and/or third liquid medium under high pressure onto the at least one core and during the entire production of the first and/or second and/or third coating the at least one core is constantly dried, preferably with an air current, whereas the other coatings, preferably the first and/or second and/or third coating are produced without spraying the first and/or second and/or third liquid medium under high pressure onto the at least one core and drying the at least one core constantly.

By spraying the liquid media, that is the first, second and/or third liquid medium, with a high pressure onto the at least one core, the liquid media are distributed extremely finely and extremely regularly on the surface of the at least one core. This results preferably in a very smooth surface of the coated core. Furthermore, by said high pressure the liquid media is present in form of very small liquid droplets, resulting in a large surface. Due to said large surface the at least one layer of the coatings can be solidified, preferably dried, very quickly.

In a preferred embodiment of the second aspect the pressure with which the second liquid medium is sprayed onto the cores in step dd) is not constant, preferably is continuously increased or continuously decreased, preferably is continuously increased at the beginning and after reaching a maximum continuously decreased.

In a preferred embodiment of the second aspect the pressure with which the second liquid medium is sprayed onto the cores in step dd) is constant.

In a preferred embodiment of the second aspect the pressure with which the third liquid medium is sprayed onto the cores in step gg) is not constant, preferably is continuously increased or continuously decreased, preferably is continuously increased at the beginning and after reaching a maximum continuously decreased.

In a preferred embodiment of the second aspect the pressure with which the third liquid medium is sprayed onto the cores in step gg) is constant.

Especially the combination of spraying with high pressure and drying constantly results in a very time- and cost-efficient process producing cores with a very smooth surface, since the liquid media being extremely finely and regularly distributed on the cores can be dried very quickly.

In a preferred embodiment of the second aspect the process comprises as final coating step a step, wherein a finishing agent, preferably wax, is applied to the coated cores, preferably to polish and/or gloss the coating. In a preferred embodiment of the second aspect, the coating and drying steps are repeated 5 to 50 times.

In a furthermore preferred embodiment, the second aspect relates to a method for preparing the above-identified coated comestible comprising a core and a first, and optionally second, coating, which comprises in a first process step applying a first liquid medium, for instance a coating solution or a coating suspension, comprising a first part of the coating ingredients to the core for the purpose of applying one layer and then, in a second process step dusting with a second part of the coating ingredients, i.e. one or more of the coating ingredients in powder form, and drying, preferably with air, in particular an air current, at 20 to 80°C, the coated cores, wherein the second part of the ingredients, in particular the isomaltulose, the at least one binding agent and optionally at least one panning additive, are applied in an amount from 30% to 75%, preferably 30% to 60%, preferably 40% to 55%, based on total solid content of the first coating, and wherein preferably said steps are optionally repeated one or more times in alternation, preferably five to 50 times In a preferred embodiment in which a second coating is desired, said series of process steps has to be conducted with a second liquid medium and the corresponding dry charge of coating ingredients.

In a furthermore preferred embodiment of the second aspect it is foreseen that after conducting the cycles and thereby applying the first and optionally second coating a final finishing step, in particular a step to apply at least one film forming agent, is conducted so as to obtain by the use of at least one film-forming agent a film coating on the coated cores. Preferably, such a film coating may also comprise at least one food color.

Further preferred embodiments of the present invention are the subject-matter of the subclaims.

The invention will be illustrated by the non-limiting figures:

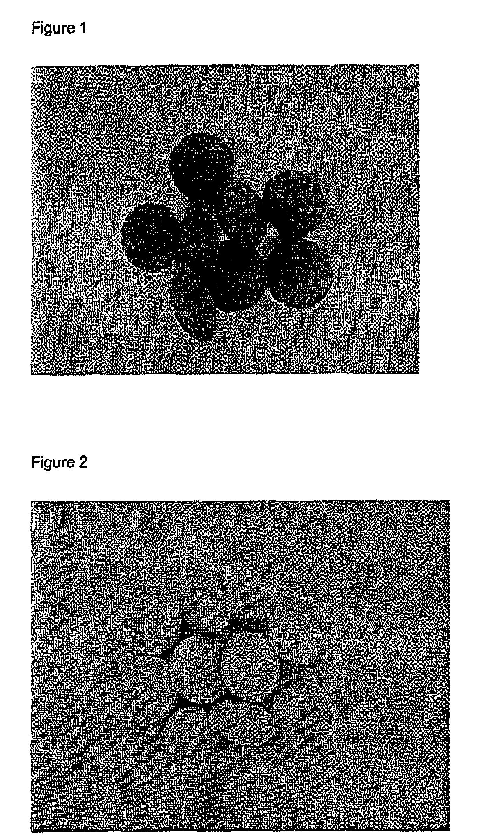

Figure 1 shows chocolate lentils with no coating.
Figure 2 shows chocolate lentils with the inventive coating.

### Examples

The invention will now be described in more detail by way of the non-limiting examples.

### Example 1

### 1.1 Preparation of the pre-coating

For the production of the pre-coating solution, palatinose (isomaltulose) was dissolved in water of 65°C while stirring. Subsequently, a gum arabic solution (50% aqueous solution) while stirring was added. When the solution had a temperature of 60°C, rice starch Remy B7 was added. Subsequently to the adding a high shear mixer (Ultra turrax at highest speed) was used for dispersing Remy B7 properly (no agglomerates should be present). The solution was kept at a temperature of 65°C in a closed vessel until its application to the chocolate cores. The obtained solution had the following recipe:

| | |
|---|---|
| Palatinose -N | 60.0 % |
| Gum Arabic (50% solution in water) | 6.0 % |
| Remy B7 | 5.0 % |
| Water | 29.0 % |

This solution was then used for application to 7 kg of chocolate lentils provided in an open pan (medium speed at 15 to 18 revolutions/min).

After the solution application to the cores (for amounts cf. tables of trails 1 to 4) in most cases dry charge as either palatinose-PF or Remy B7 were used as dusting powder. In order to prevent the formation or presence of agglomerates the dry charge powder has been sieved prior to use.

Either subsequently to the application of the powder or permanently/constantly, the pre-coated chocolate lentils were dried by an air current with a temperature of 19°C (air from Driam coater).

The occurring excess powder dust was removed by using a mobile hood prior to the application of a further amount of the pre-coating solution.

Four different trails for the production of pre-coatings were performed:
Trial 1: pre-coating with Palatinose-N (PSE-N; crystalline; 90% particles have a particle size between 200 and 700 µm), dry charge with Remy B7
Trial 2: pre-coating with Palatinose-N, dry charge with Palatinose-PF (PSE-PF; powder; 90% particles have a particle size less than 100 µm)
Trial 3: pre-coating with Palatinose-N, dry charge with Palatinose-PF, extra layers
Trial 4: pre-coating with Palatinose-N, dry charge with Palatinose-PF, extra layers + timing (improved version of trial 3)

| **Trail 1/ Cycle** | **Amount of pre-coating solution (g)** | **Distribution time (s)** | **Drying time (s)** | **Dry charge (Remy B7)** |
|---|---|---|---|---|
| 1 | 54.7 | 30-60 | 30 | 50g |
| 2 | 49.4 | 30-60 | 30 | 50g |
| 3 | 52.7 | 30-60 | 30 | 50g |
| 4 | 53.0 | 30-60 | 30 | 50g |
| 5 | 58.9 | 30-60 | 30 | 50g |
| 6 | 56.6 | 30-60 | 30 | 50g |
| 7 | 62.0 | 30-60 | 30 | 0 |
| 8 | 50.0 | 30-60 | 30 | 0 |
| 9 | 50.0 | 30-60 | 30 | 0 |
| 10 | 54.0 | 30-60 | 30 | 0 |
| 11 | 54.9 | 30-60 | 30 | 0 |
| 12 | 68.1 | 30-60 | 30 | 0 |
| 13 | 66.7 | 30-60 | 30 | 0 |
| 14 | 59.9 | 30-60 | 30 | 0 |
| 15 | 63.9 | 30-60 | 30 | 0 |

| **Trial 2/ Cycle** | **Amount of coating solution (g)** | **Distribution time (s)** | **Drying time (s)** | **Dry charge (g) PSE-PF** |
|---|---|---|---|---|
| 1 | 57.0 | 30 | 30 | 50 |
| 2 | 55.7 | 30 | 30 | 50 |
| 3 | 64.0 | 30 | 30 | 50 |
| 4 | 57.7 | 30 | 30 | 50 |
| 5 | 57.5 | 30 | 30 | 50 |
| 6 | 55.2 | 30 | 30 | 50 |
| 7 | 65.0 | 30 | 30 | 50 |
| 8 | 71.2 | 30 | 30 | 50 |
| 9 | 66.9 | 30 | 30 | 50 |
| 10 | 55.9 | 30 | 30 | 50 |
| 11 | 67.3 | 30 | 30 | 50 |
| 12 | 54.9 | 30 | 30 | 50 |
| 13 | 55.4 | 30 | 30 | 50 |
| 14 | 68.1 | 30 | 30 | 50 |
| 15 | 71.1 | 30 | 30 | 50 |

| **Trial 3/ Cycle** | **Amount of coating solution (g)** | **Distribution time (s)** | **Drying time (s)** | **Dry charge (g) PSE-PF** |
|---|---|---|---|---|
| 1 | 38.0 | 30 | 30 | 50 |
| 2 | 56.0 | 30 | 30 | 50 |
| 3 | 63.0 | 30 | 30 | 50 |
| 4 | 55.0 | 30 | 30 | 50 |
| 5 | 63.0 | 30 | 30 | 50 |
| 6 | 57.0 | 30 | 30 | 50 |
| 7 | 44.4 | 30 | 30 | 50 |
| 8 | 46.7 | 30 | 30 | 50 |
| 9 | 46.0 | 30 | 30 | 50 |
| 10 | 64.0 | 30 | 30 | 50 |
| 11 | 64.3 | 30 | 30 | 50 |
| 12 | 55.3 | 30 | 30 | 50 |
| 13 | 61.7 | 30 | 30 | 50 |
| 14 | 66.7 | 30 | 30 | 50 |
| 15 | 61.0 | 30 | 30 | 50 |

| **Trial 4/ Cycle** | **Amount of coating solution (g)** | **Distribution time (s)** | **Drying time (s)** | **Dry charge (g) PSE-PF** |
|---|---|---|---|---|
| 1 | 50.9 | 30 | 30 | 100 |
| 2 | 57.8 | 30 | 30 | 50 |
| 3 | 52.5 | 30 | 30 | 50 |
| 4 | 54.0 | 30 | 30 | 50 |
| 5 | 56.9 | 30 | 30 | 50 |
| 6 | 42.6 | 30 | 30 | 100 |
| 7 | 51.2 | 30 | 30 | 50 |
| 8 | 54.8 | 30 | 30 | 50 |
| 9 | 56.0 | 30 | 30 | 50 |
| 10 | 51.5 | 30 | 30 | 50 |
| 11 | 45.6 | 30 | 30 | 50 |
| 12 | 48.1 | 30 | 30 | 50 |
| 13 | 60.4 | 30 | 30 | 50 |
| 14 | 59.4 | 30 | 30 | 50 |
| 15 | 61.4 | 30 | 30 | 50 |

The appearances of the pre-coating are shown in the table below:

| Trial | Appearance of the pre-coating | % coating (based on the total weight of the pre-coated chocolate core) |
|---|---|---|
| 1 | white | 8.3 |
| 2 | more white | 15 |
| 3 | white | 14 |
| 4 | more white | 14 |

### 1.2 Preparation of final coatings

The formulation of the second/final coating solution (10 kg) was as follows:

| | % |
|---|---|
| Palatinose PAP-N | 60.0 |
| Gum Arabic (50% solution in water) | 6.0 |
| Colour | 1.0 |
| Water | 33.0 |

The second/final coating solution was produced in the same way as the first liquid medium under item 1.1 without the addition of Remy B7.

The following trails were performed:
- Trial 1 a = pre-coating trial 1 (green colour = Kohlwax 7625 P100)
- Trial 2a = pre-coating trial 2 (green colour = Kohlwax 7625 P100)
- Trial 4a = pre-coating trial 4 (orange colour = G100,000-WS-P, CHR HANSEN)

In trails 1 a and 4a additional 15 g colour was added at step 58.

| **Trial 1a/ Cycles** | **Amount of coating solution (g)** | **Distribution time (s)** | **Drying time (s)** |
|---|---|---|---|
| 1 | 36.4 | 15 | 60 |
| 2 | 40.4 | 10 | 60 |
| 3 | 44.4 | 10 | 60 |
| 4 | 43.2 | 10 | 60 |
| 5 | 44.7 | 10 | 60 |
| 6 | 46.8 | 10 | 60 |
| 7 | 45.4 | 10 | 60 |
| 8 | 45.0 | 10 | 60 |
| 9 | 45.1 | 10 | 90 |
| 10 | 48.7 | 10 | 60 |
| 11 | 43.8 | 10 | 90 |
| 12 | 38.5 | 10 | 90 |
| 13 | 47.0 | 10 | 120 |
| 14 | 46.1 | 10 | 60 |
| 15 | 46.9 | 10 | 60 |
| 16 | 49.2 | 10 | 60 |
| 17 | 48.4 | 10 | 240 |
| 18 | 37.5 | 10 | 60 |
| 19 | 44.1 | 10 | 60 |
| 20 | 43.5 | 10 | 60 |
| 21 | 47.1 | 10 | 60 |
| 22 | 47.4 | 10 | 60 |
| 23 | 43.6 | 10 | 60 |
| 24 | 45.1 | 10 | 60 |
| 25 | 43.4 | 10 | 60 |
| 26 | 45.2 | 10 | 60 |
| 27 | 46.9 | 10 | 60 |
| 28 | 42.2 | 10 | 60 |
| 29 | 43.2 | 10 | 60 |
| 30 | 37.2 | 10 | 60 |
| 31 | 38.8 | 10 | 60 |
| 32 | 37.8 | 10 | 60 |
| 33 | 40.0 | 10 | 60 |
| 34 | 41.5 | 10 | 60 |
| 35 | 37.0 | 10 | 60 |
| 36 | 38.7 | 10 | 60 |
| 37 | 38.9 | 10 | 60 |
| 38 | 34.0 | 10 | 60 |
| 39 | 36.3 | 10 | 60 |
| 40 | 35.2 | 10 | 60 |
| 41 | 25.0 | 10 | 60 |
| 42 | 40.8 | 10 | 60 |
| 43 | 32.6 | 10 | 60 |
| 44 | 36.5 | 10 | 60 |
| 45 | 34.9 | 10 | 60 |
| 46 | 36.7 | 10 | 60 |
| 47 | 37.0 | 10 | 60 |
| 48 | 37.4 | 10 | 60 |
| 49 | 38.4 | 10 | 60 |
| 50 | 37.4 | 10 | 60 |
| 51 | 37.5 | 10 | 60 |
| 52 | 37.8 | 10 | 60 |
| 53 | 36.8 | 10 | 60 |
| 54 | 35.9 | 10 | 240 |
| 55 | 45.1 | 10 | 60 |
| 56 | 58.5 | 10 | 60 |
| 57 | 52.4 | 10 | 60 |
| 58 | 70.4 | 10 | 60 |
| 59 | 70.1 | 10 | 60 |
| 60 | 77.4 | 10 | 60 |
| 61 | 87.4 | 10 | 60 |
| 62 | 80.5 | 10 | 60 |
| 63 | 85.7 | 10 | 60 |
| 64 | 96.1 | 10 | 90 |
| 65 | 90.1 | 10 | 60 |
| 66 | 91.6 | 10 | 60 |
| 67 | 106.5 | 10 | 60 |
| 68 | 80.3 | 10 | 60 |
| 69 | 87.2 | 10 | 60 |
| 70 | 61.2 | 10 | 60, without air |

| **Trial 2a/ Cycles** | **Amount of coating solution (g)** | **Distribution time (s)** | **Drying time (s)** |
|---|---|---|---|
| 1 | 50.7 | 30 | 30 |
| 2 | 55.8 | 30 | 30 |
| 3 | 51.2 | 30 | 30 |
| 4 | 53.0 | 30 | 30 |
| 5 | 60.8 | 30 | 55 |
| 6 | 46.6 | 20 | 60 |
| 7 | 58.3 | 20 | 60 |
| 8 | 54.6 | 20 | 60 |
| 9 | 52.1 | 20 | 90 |
| 10 | 55.3 | 10 | 60 |
| 11 | 53.2 | 10 | 60 |
| 12 | 49.0 | 10 | 60 |
| 13 | 54.4 | 10 | 60 |
| 14 | 56.9 | 10 | 60 |
| 15 | 47.4 | 10 | 60 |
| 16 | 55.0 | 10 | 60 |
| 17 | 60.5 | 10 | 90 |
| 18 | 44.7 | 10 | 60 |
| 19 | 45.7 | 10 | 60 |
| 20 | 45.1 | 10 | 180 |
| 21 | 40.6 | 10 | 60 |
| 22 | 49.3 | 10 | 60 |
| 23 | 46.2 | 10 | 60 |
| 24 | 46.6 | 10 | 60 |
| 25 | 45.6 | 10 | 60 |
| 26 | 46.5 | 10 | 60 |
| 27 | 40.8 | 10 | 60 |
| 28 | 48.4 | 10 | 60 |
| 29 | 46.3 | 10 | 60 |
| 30 | 45.2 | 10 | 60 |
| 31 | 39.7 | 10 | 60 |
| 32 | 43.5 | 10 | 60 |
| 33 | 46.6 | 10 | 60 |
| 34 | 44.0 | 10 | 60 |
| 35 | 49.7 | 10 | 60 |
| 36 | 48.5 | 10 | 60 |
| 37 | 44.5 | 10 | 60 |
| 38 | 51.0 | 10 | 60 |
| 39 | 47.5 | 10 | 60 |
| 40 | 43.4 | 10 | 60 |
| 41 | 43.6 | 10 | 60 |
| 42 | 46.4 | 10 | 60 |
| 43 | 42.3 | 10 | 60 |
| 44 | 47.4 | 10 | 60 |
| 45 | 45.9 | 10 | 60 |
| 46 | 46.6 | 10 | 60 |
| 47 | 45.5 | 10 | 60 |
| 48 | 42.6 | 10 | 60 |
| 49 | 44.6 | 10 | 60 |
| 50 | Add 10g wax | 280 | 60 without air |

| **Trial 4a/ Cycle** | **Amount of coating solution (g)** | **Distribution time (s)** | **Drying time (s)** |
|---|---|---|---|
| 1 | 39.1 | 10 | 60 |
| 2 | 41.8 | 10 | 60 |
| 3 | 50.8 | 10 | 60 |
| 4 | 48.5 | 10 | 60 |
| 5 | 49.5 | 10 | 60 |
| 6 | 38.7 | 10 | 60 |
| 7 | 48.4 | 10 | 60 |
| 8 | 45.1 | 10 | 60 |
| 9 | 55.5 | 10 | 60 |
| 10 | 102.0 | 10 | 90 |
| 11 | 93.2 | 10 | 90 |
| 12 | 47.9 | 10 | 60 |
| 13 | 54.2 | 10 | 60 |
| 14 | 49.5 | 10 | 60 |
| 15 | 45.6 | 10 | 90 |
| 16 | 91.9 | 10 | 60 |
| 17 | 42.0 | 10 | 60 |
| 18 | 40.9 | 10 | 60 |
| 19 | 47.0 | 10 | 60 |
| 20 | 99.8 | 10 | 240 |
| 21 | 52.9 | 10 | 60 |
| 22 | 47.6 | 10 | 60 |
| 23 | 96.0 | 10 | 60 |
| 24 | 94.3 | 10 | 60 |
| 25 | 50.5 | 10 | 60 |
| 26 | 45.1 | 10 | 60 |
| 27 | 47.3 | 10 | 60 |
| 28 | 48.9 | 10 | 60 |
| 29 | 95.4 | 10 | 60 |
| 30 | 92.4 | 5 | 60 |
| 31 | 48.9 | 5 | 60 |
| 32 | 48.0 | 5 | 60 |
| 33 | 48.9 | 5 | 60 |
| 34 | 52.0 | 5 | 60 |
| 35 | 49.1 | 5 | 60 |
| 36 | 50.3 | 5 | 60 |
| 37 | 98.0 | 5 | 90 |
| 38 | 93.9 | 5 | 90 |
| 39 | 98.0 | 5 | 60 |
| 40 | 46.0 | 5 | 60 |
| 41 | 44.6 | 5 | 60 |
| 42 | 44.9 | 5 | 60 |
| 43 | 94.5 | 5 | 90 |
| 44 | 86.6 | 5 | 90 |
| 45 | 80.6 | 5 | 90 |
| 46 | 86.6 | 5 | 90 |
| 47 | 94.1 | 5 | 90 |
| 48 | 94.6 | 5 | 90 |
| 49 | 92.2 | 5 | 90 |
| 50 | 96.7 | 5 | 90 |
| 51 | 46.4 | 5 | 60 |
| 52 | 44.7 | 5 | 60 |
| 53 | 46.1 | 5 | 60 |
| 54 | 48.2 | 5 | 60 |
| 55 | 43.2 | 5 | 60 |
| 56 | 46.0 | 5 | 60 |
| 57 | 47.9 | 5 | 60 |
| 58 | 90.9 | 5 | 90 |
| 59 | 90.9 | 5 | 60 |
| 60 | 93.0 | 5 | 60 |
| 61 | 91.6 | 5 | 60 |
| 62 | 95.5 | 5 | 60 |
| 63 | 92.9 | 5 | 60 |
| 64 | 90.7 | 5 | 90 |
| 65 | 95.4 | 5 | 60 |
| 66 | 95.1 | 5 | 60 |
| 67 | 97.7 | 5 | 60 |
| 68 | 93.4 | 5 | 60 |
| 69 | 87.7 | 5 | 240 |
| 70 | 46.9 | 5 | 60, without air |

### 2.3 Discussion

### 2.3.1 Pre-coatings

All pre-coated products showed sufficient whiteness.

### 2.3.2 Final coatings

Final coatings were smooth, and no chipping was observed.

### 2.3.3 Both the pre-coatings and the final coatings are smooth and no chipping occurs.

### Example 2 - Process for the production of pre-coated chocolate cores with TiO₂ as whitening agent

Palatinose (isomaltulose) was dissolved in water of 65°C while stirring. Subsequently, a gum arabic solution (50% aqueous solution) while stirring was added. When the solution had a temperature of 60°C, TiO₂ was added. Subsequently to the adding a high shear mixer (ultra turrax) was used for dispersing TiO₂ properly. The solution was kept at a temperature of 65°C in a closed vessel until its application to the chocolate cores. The obtained solution (10 kg) had the following recipe:

| | |
|---|---|
| Palatinose -N | 60.0 % |
| Gum Arabic (50% solution in water) | 6.0 % |
| TiO₂ | 1.0 % |
| Water | 33.0 % |

This solution was then applied to 7 kg of chocolate lentils provided in an open pan (medium speed at 15 to 18 revolutions/min).

After each applying of the certain amount of the solution (ca. 50g) to the cores 50 g palatinose-PF was used as dusting powder which was sieved prior to the application to avoid agglomerates.

After 15 cycles pre-coated chocolate lentils were obtained with a good white appearance.

### Example 3

### 3.1 Production of the first liquid medium used for the pre-coating

Isomaltulose (Palatinose) was dissolved in water of 65°C while stirring. Subsequently, a gum arabic solution (50% aqueous solution) while stirring was added. When the solution had a temperature of 60°C, rice starch Remy B7 was added. Subsequently to the addition, a high shear mixer (Ultra turrax at highest speed) was used for dispersing Remy B7 properly (no agglomerates should be present). The solution was kept at a temperature of 65°C (the electric heating turned to 70 °C) and stirred in a closed storing vessel until its application to the chocolate cores, preferably to prevent decanting of preferably rice starch or titanium dioxide. The obtained solution had the following recipe (10 kg):

| | |
|---|---|
| 54.5 % | Palatinose N |
| 5.5 % | gum arabic solution (50%) |
| 30.9 % | Water |
| 9.1 % | rice starch (Remy B7) |

### 3.2 Production of the second liquid medium used for the second coating

Palatinose (Isomaltulose) was dissolved in water of 65°C while stirring. Subsequently, a gum arabic solution (50% aqueous solution) and a yellow colour (Eurocert Tartrazin SENSIENT 311840005) were added while stirring. The solution was kept at a temperature of 65°C (the electric heating turned to 70 °C) and stirred in a closed storing vessel until its application to the chocolate cores. The obtained solution (10 kg) had the following recipe:

| | |
|---|---|
| 60% | Palatinose N |
| 8% | gum arabic solution (50%) |
| 32 % | water |

+ 3 g (in 10 kg of the solution) Eurocert Tartrazin SENSIENT 311840005

### 3.3 Production of the coated chocolate cores

7 kg of chocolate lentils were added to an open pan. Then, the liquid media were sprayed onto the chocolate lentils with a spraying equipment from GABLER. The liquid media were sprayed onto the cores with a 33 bar product pressure on the nozzle of the spraying equipment, whereby an atomization of the liquid media were achieved. A ratio of 1 to 33 was used which means 1 bar air pressure and 33 bar product pressure on the nozzle. By said spraying equipment a spray-rate of about 15 - 16 g solution per second was adjusted.

A permanent air current (20 °C / 20 % rH) was used for drying and 75 g (5 s spraying) - 150 g (10 s spraying) of the pre-coating solution per cycle have been applied to the cores.

The amount of liquid medium applied per cycle, the distribution times and drying times in each cycle are listed in the following tables:

| **Precoating/ Cycle** | **Amount of coating solution (g)** | **Distribution time (s)** | **Drying time (s)** |
|---|---|---|---|
| 1 | 75 | 0 | 60 |
| 2 | 75 | 0 | 60 |
| 3 | 75 | 0 | 60 |
| 4 | 75 | 0 | 60 |
| 5 | 75 | 0 | 60 |
| 6 | 150 | 0 | 90 |
| 7 | 75 | 0 | 60 |
| 8 | 75 | 0 | 60 |
| 9 | 75 | 0 | 60 |
| 10 | 150 | 0 | 90 |
| 11 | 75 | 0 | 60 |
| 12 | 75 | 0 | 60 |
| 13 | 75 | 0 | 60 |
| 14 | 75 | 0 | 60 |
| 15 | 75 | 0 | 60 |

| **Second coating/ Cycle** | **Amount of coating solution (g)** | **Distribution time (s)** | **Drying time (s)** |
|---|---|---|---|
| 1 | 75 | 0 | 60 |
| 2 | 75 | 0 | 60 |
| 3 | 75 | 0 | 60 |
| 4 | 75 | 0 | 60 |
| 5 | 75 | 0 | 60 |
| 6 | 150 | 0 | 90 |
| 7 | 75 | 0 | 60 |
| 8 | 75 | 0 | 60 |
| 9 | 75 | 0 | 60 |
| 10 | 150 | 0 | 90 |
| 11 | 75 | 0 | 60 |
| 12 | 75 | 0 | 60 |
| 13 | 75 | 0 | 60 |
| 14 | 150 | 0 | 90 |
| 15 | 150 | 0 | 90 |
| 16 | 75 | 0 | 60 |
| 17 | 75 | 0 | 60 |
| 18 | 75 | 0 | 60 |
| 19 | 150 | 0 | 90 |
| 20 | 150 | 0 | 90 |
| 21 | 75 | 0 | 60 |
| 22 | 75 | 0 | 60 |
| 23 | 75 | 0 | 60 |
| 24 | 150 | 0 | 90 |
| 25 | 75 | 0 | 60 |
| 26 | 75 | 0 | 60 |
| 27 | 75 | 0 | 60 |
| 28 | 150 | 0 | 90 |
| 29 | 75 | 0 | 60 |
| 30 | 75 | 0 | 60 |
| 31 | 75 | 0 | 60 |
| 32 | 150 | 0 | 90 |
| 33 | 75 | 0 | 60 |
| 34 | 75 | 0 | 60 |
| 35 | 75 | 0 | 60 |
| 36 | 75 | 0 | 60 |
| 37 | 75 | 0 | 60 |
| 38 | 75 | 0 | 60 |
| 39 | 75 | 0 | 60 |

### 3.4 Results

The atomization of the pre-coating solution/suspension leads to very good distribution of the sprayed solution on the cores. Thus, the whiteness of the pre-coated lentils is homogenously distribute and covers the chocolate lentils completely with an opaque whiteness. The precoated and overall coated lentils are very smooth.

Especially, since no dry charging is performed, powder accumulations on the coated cores have been avoided, whereby the smoothness of the cores is further improved while simultaneously the coating time is quite short.

The installation of buffels inside the pan improves the coating process since the coating process also smoothens the pan itself and without buffels, leads to "swimming" or "gliding" of the whole panning charge especially at the end of the coating process.

## Claims

1. A process for coating chocolate cores comprising the steps of:
a) providing at least one chocolate core to be coated,
b) applying to the at least one chocolate core a first liquid medium comprising a whitening agent, so as to obtain at least one layer of a pre-coating,
c) solidifying the at least one layer of the pre-coating, so as to obtain at least one pre-coated chocolate core, and
d) applying to the at least one pre-coated chocolate core a second liquid medium comprising isomaltulose and a binding agent C2, so as to obtain at least one layer of a second coating,
wherein optionally the steps b) and c) are repeated at least 2 times as to build up more than one layer of the pre-coating.

2. The process according to claim 1, wherein the first liquid medium comprises further isomaltulose.

3. The process according to any one of the preceding claims, wherein the binding agent C2 is gum arabic, gelatine, gum tragacanth, locust bean gum, guar gum, vegetable gums, alginate, maltodextrines, corn syrup, pectin, cellulose-type materials, carboxymethylcellulose, hydroxymethylcellulose, potato starch, corn starch, starch, modified starch, rice starch, xanthan or mixtures thereof.

4. The process according to any one of the preceding claims, wherein the first liquid medium comprises further a binding agent.

5. The process according to any one of the preceding claims, wherein the whitening agent in the first liquid medium is selected from TiO₂ and starch.

6. The process according to any one of the preceding claims, wherein the first liquid medium comprises at least 0.1 % whitening agent (based on the total amount of the first liquid medium).

7. The process according to any one of the preceding claims, wherein the first and/or the second liquid medium is applied to the cores by spraying.

8. The process according to claim 7, wherein the spraying pressure is from 10 to 100 bars.

9. The process according to any one of the preceding claims, wherein the solidifying in step c) is performed by drying of the first liquid medium.

10. The process according to claim 9, wherein the drying is performed at a temperature between 5 and 24 °C.

11. The process according to any one of the preceding claims, wherein during the entire process an air stream is applied to the cores, so as to dry the cores constantly.

12. The process according to any one of the preceding claims, wherein the first liquid medium comprises 50 to 90 % by weight isomaltulose (based on the total amount of the first liquid medium).

13. The process according to any one of the preceding claims, wherein after the application of the first liquid medium according to step b) isomaltulose and/or starch is applied to the pre-coated cores in powder form.

14. A coated chocolate core produced by the process according to claims 1 to 13.
